# EUROPEAN PATENT SPECIFICATION

(11) **EP 3 799 234 B1**
(45) Date of publication and mention of the grant of the patent: **05.04.2023**
(21) Application number: 20197868.1
(22) Date of filing: 23.09.2020
(51) Int. Cl.: H02G 3/08, H02G 3/12, H02G 3/14

(54) **SUPPORT MEMBER FOR AN ELECTRICAL INSTALLATION BOX**
TRÄGERELEMENT FÜR EINEN ELEKTROINSTALLATIONSKASTEN
ÉLÉMENT DE SUPPORT POUR UNE BOÎTE D'INSTALLATION ÉLECTRIQUE

(30) Priority: 25.09.2019 IN 201931038669
(43) Date of publication of application: 31.03.2021
(73) Proprietor: Schneider Electric Industries SAS, 92500 Rueil-Malmaison (FR)
(72) Inventor: ANANT NAYAK, Gireesh, 560067 Bangalore, Karnataka (IN); CHIKKANNA, Manohar, 560073 Bangalore, Karnataka (IN); VICKTORIUS, Richard, 50733 Köln (DE); NARAYANAN, Shree Ganesh, 51647 Gummersbach (DE)
(74) Representative: Swea IP Law AB

(56) References cited:
- WO-A1-2014/047716
- SE-B- 463 842
- US-A1- 2015 001 361
- US-B1- 8 658 894

## Description

### Field of invention

The present invention relates generally to a system comprising an electrical installation box and a support member attached to said electrical installation box.

More specifically the invention relates to a support member providing support to an electrical installation box with respect to a board on which the electrical installation box is to be mounted.

### Background of the invention

Installation boxes, such as wall or ceiling boxes are widely used behind board walls or ceilings. To allow the same installation box to be used for different spacing between the mounting base, on which the installation box is mounted, and the surface of the board wall or ceiling, adjustable spacers of a few predetermined heights are used. These spacers are generally cylindrical spacer rings adapted to be inserted to various degrees into the cylindrical compartment of the installation box and thereby adjusting the level of installation.

The installation boxes are typically mounted on a support member, the spacers placed in the cylindrical compartment and adjusted to height, then a magnetic locating device is placed in them, and finally they are covered entirely when the wall or ceiling board is mounted. The cylindrical shape of the compartment and the spacer makes it quite easy to uncover the installation box again when it is needed for the installation of an installation device such as a switch, a socket, a dimmer or the like which can also generally be referred as electrical inserts.

All the installer needs to do is to locate the magnetic locating device using an appropriate seeker (e.g. a magnetic material or a magnet), and then drill a circular hole of a predetermined diameter corresponding to the dimension of the cylindrical mounting part and the spacer. The magnetic locating device can then be removed for reuse in another installation, upon which the installation device may be mounted by inserting it partially through the hole into the spacer and securing it thereto, the spacer thus serving as a receptacle for the installation device.

As to the installation devices there is a desire to construct them so that they do not protrude too far over the mounting surface, this *inter alia* makes the installation devices less prone to destruction from impacts, as they are less likely to get hit, but it also improves the aesthetic appearance. However, to make the installation devices more flush with the mounting surface, e.g. not protruding more than a predefined amount from the mounting surface, in the following referred to as flush mounting, necessitates that a larger part of installation device, i.e. of the part comprising the mechanic, electric and electronic parts, is located within the installation box.

In an existing installation this is not an easy task because the diameters of the spacer matches that of the cylindrical compartment of the existing installation box, which, in turn, is located under the board and therefore cannot be replaced without destroying the board by making a large hole in it. Without the support member the flush installation of the installation box cannot withstand the push and pull forces of the sockets, switches and other external forces.

To make the protuberance from the board-surface level lesser than 3 mm by reusing all existing insert assemblies and wiring devices which are mounting on the wall, one has to cut the wall surface and push the electrical installation box inside the wall and make the required dimension. But disadvantageously, in general aesthetic plates are square and cutters are round, therefore making square hole in the box by cutting and filling of the wall in not only difficult but also takes lot of installer's time.

Next option is to take insert butting surface of the installation box in by cutting bigger drill hole and make connecting piece where the electrical inserts and fixing frame will be assembled and fixed to give a seating arrangement. But to mount the wiring devices on the connecting piece instead of wall, installation boxes which are used in current installation systems will be redundant. In this case if drill bigger drill is used the current installation boxes will not withstand the pull out forces of this drills. Installation boxes mounted inside hollow wall will come out from the hole if there is no support.

US20150001361 and WO2014047716 disclose an assembly including a bracket mountable directly to a wall. An inner periphery of the bracket defines an opening in the wall substrate. US8658894 discloses a temporary cover comprising of several parts for covering a central opening in an electrical box cover plate. The cover has a front wall, a side wall forming a rim around the periphery of the front wall, a connecting mechanism on the rim for releasably connecting the temporary cover to the box cover plate.

Therefore, a few drawbacks of the existing supporting systems include:
- no support from back side of the box which will not withstand for socket pull out forces;
- no solution available for modularity of box docking with existing support part structure;
- installation system cannot withstand switch push forces when support part transmit forces to beam-fixing;
- difficultly in mounting the screw to the installation box in case of single, multi board and tile conditions;
- no provision available for installing any spacer ring inside the support part in case of multi board conditions;
- no quick installation kit for reducing the time of installation.

With a view therefore to overcome the drawbacks of the existing support structures in flush mounting of electrical installation box and system thereof, the inventors felt the need to develop a novel support member. Support part is mounted on the box by clipping mechanism which supports from backside of the wallboards when the installation box is installed with flush mounting. The support member is also provided with provisions to receive beam-fixing member, spacer ring assembly etc. to mount the installation box on the beam which is used to create structures of the wall and match the level of wallboard achieving flush mounting thereof.

### Summary of the invention:

Accordingly, the present invention provides a system comprising an electrical installation box and a support member attached to said electrical installation box for flush mounting on a wallboard. The support member comprises:
- a rear surface removably attached with the electrical installation box;
- a front surface to be fixedly attached with the wallboard; and
- a central cavity of matching profile with entry portion of the electrical installation box, said front surface and rear surface are extended outwardly about said central cavity.

According to the invention, said rear surface comprises:
- at least a set of fixing members disposed about said central cavity and extending from said rear surface to removably attach with the electrical installation box;
- at least a set of guiding members disposed about said central cavity for aligning said fixing members with said electrical installation box; and
- at least a receiving provision which receives a split nut assembly.

According to the invention said front surface comprises:
- at least a set of releasing slots disposed opposite to every fixing member on said rear surface such that said releasing slots extend up to said rear surface to release said fixing members from the electrical installation box;
- the split nut assembly which has clipping members and
- at least a fastener aligning slot to guide fasteners into said split nut assembly, said at least a fastener aligning slot is disposed opposite to said at least a receiving provision for receiving split nut assembly of said rear surface.

According to one object of the invention, said central cavity has a matching annular profile for receiving a spacer ring assembly for adjusting the level said electrical installation box for multiple wallboards configuration.

According to another object of the invention the annular central cavity is provided with threaded inner periphery to attach with entry portion of said electrical installation box to align said support member by applying torsional force.

According to one embodiment of the invented support member, said at least a receiving provision for receiving split nut assembly comprises a pair of receiving provisions disposed symmetrically about said central cavity, each of said receiving provisions comprises a cavity and a pair of legs disposed about the cavity to match with fixing members of said split nut assembly.

According to one preferred embodiment, the at least a set of fixing members of said rear surface are linear snaps fits with J-shaped snapping protuberance.

According to one object of the invention, said at least a set of fixing members and at least a set of guiding members of said rear surface are disposed symmetrically about said central cavity to match with corresponding receiving slots of the electrical installation box.

According to another object of the invention, said at least a set of fixing members and at least a set of guiding members of said rear surface are disposed symmetrically about said central cavity to match with corresponding receiving slots of a beam-fixing member attached with said electrical installation box.

According to yet another object of the invention, said at least a set of releasing slots on the front surface are adopted to accommodate a screwdriver to press and disengage the fixing members on said rear surface from the electrical installation box.

### Brief description of the drawings

An embodiment of the invention will now be described with reference to the accompanying drawings. It will however be appreciated that the embodiment exemplified in the drawings are merely illustrative and not limitative to the scope of the invention, because it is quite possible, indeed often desirable, to introduce a number of variations in the embodiment that has been shown in the drawings.

In the accompanying drawings:
Figure 1 depicts the mounting direction of the invented support member with a typical electrical installation box according to one embodiment of the invention.
Figures 2(a) and 2(b) depict the front and backside view respectively of a complete assembly of the electrical installation box mounted on a wallboard with cover frame.
Figures 3(a) and 3(b) depict the front and backside view respectively of the electrical installation box mounted on a beam by means of a beam-fixing member attached with the installation box.
Figure 4 depicts a top view of the electrical installation box with the support part and the beam-fixing member attached and mounted on a beam.
Figures 5(a) and 5(b) illustrate multi gang combination of typical electrical installation boxes with invented support member mounted on it.
Figures 6(a) and 6(b) illustrate multi gang combination of typical electrical installation box with invented support member mounted on a beam by means of the beam-fixing member.

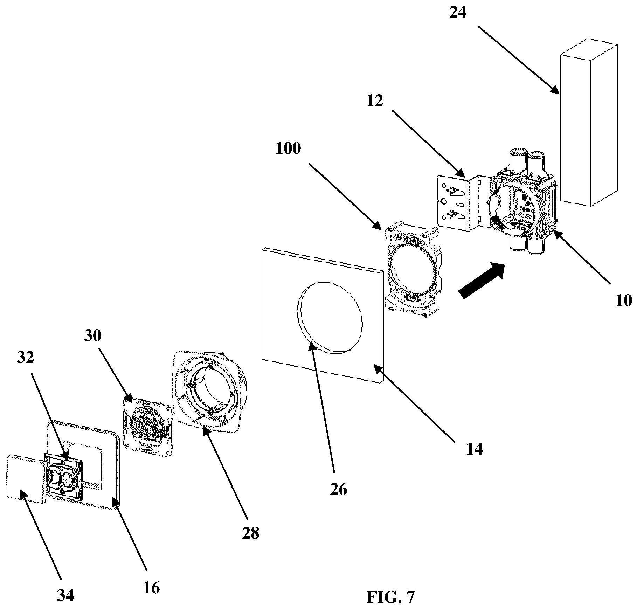

Figure 7 illustrates the installation members required for flush mounting of the electrical installation box.
Figures 8(a) and 8(b) are the perspective view of the rear surface and front surface respectively of the invented support member according to one most preferred embodiment of the invention.
Figure 9 illustrates the assembly of a split nut assembly inserted in a predefined slot on the rear surface of the invented support member.
Figures 10 and 11 depict the use of board-fixing member for multiple beam scenarios while the support member is attached to the electrical installation box providing support from the backside of the wallboard.

### Detailed description of the invention

To make cover frames protrude less than 3mm without changing the existing electrical insert, a typical electrical installation box requires additional support from the backside of the wallboard. To satisfy this condition, installer needs to take complete mounting position down so larger cutter is used to mount the wiring devices. Also cutter should not hit beam-fixing member attached to the installation box, so relief is provided to avoid installation problems. In flush mounting also, the mounting process is same like existing installation system; beam is supportive structure of the hollow wall. Box is mounted on the concrete wall or POP or wooden walls. POP walls are supported on wooden or metal beams. Box is mounted on the beam with the help of the beam-fixing member. The support member mounted on the installation box prevents displacement of the installation box with respect to the wallboard. After drilling a spacer ring is assembled to the installation box with quick fix solutions. Cover frame and electrical insert assembly are mounted on the spacer ring to compensate the height and achieve a flush mounting.

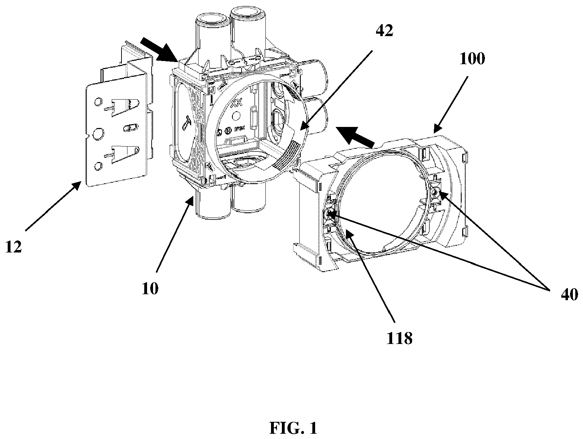

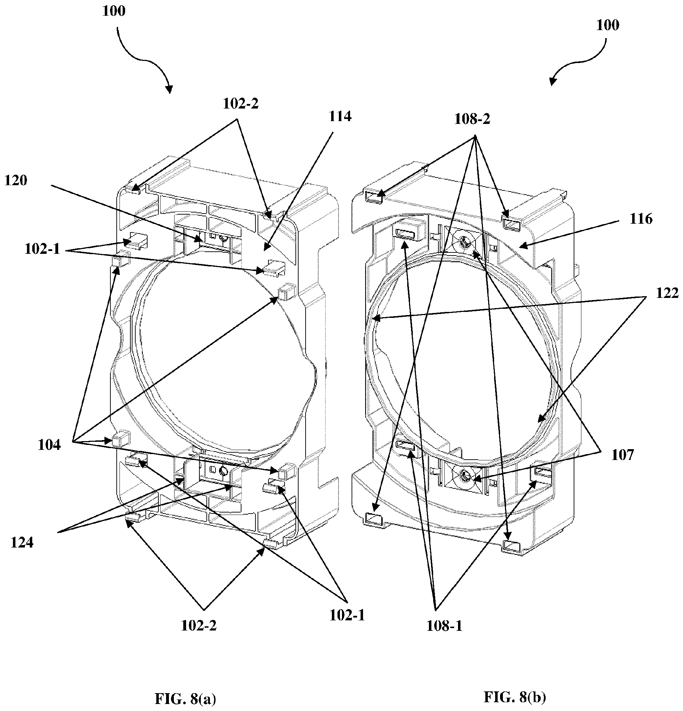

As shown in figure 1 of the accompanying drawings, a beam-fixing member (12) and the invented support member (100) are aligned and attached to an electrical installation box (10) for flush mounting on a wallboard (14). The beam-fixing member (12) is attached to a rear surface of the electrical installation box (10) and the support member (100) is attached to a front surface thereof. Figures 8(a) and 8(b) depicts a perspective view of the invented support member (100) with the essential and none-essential features. The support member (100) comprises of a rear surface (114), a front surface (116), and a central cavity (118). The central cavity (118) is adopted to match with the entry portion (42) of the electrical installation box (10) (figure 1). The rear surface (114) is configured to removably attach with the electrical installation box (10). The front surface (116) is fixedly attached with the wallboard (14), so that the support member (100) is sandwiched between the wallboard (14) and installation box (10) and thereupon provides support from the backside of the wallboard (14).

As it is apparent from figures 8(a) and 8(b) that the front surface (116) and rear surface (114) are extended outwardly about said central cavity (118) such that even if larger dimension of holes are created to mount the installation box (10), only the area of these surfaces are to be increased. Now, with reference to figure 8(a), said rear surface (114) comprises: set of fixing members (102-1,102-2), a set of guiding members (104), and receiving provisions (120) to receive split nut assembly (110). Herein, two sets of fixing members (102-1,102-2) are disposed about the central cavity (118). Each of the sets consist four protruding snaps from four corners of the rear surface (114). These set of snaps are to be removably attach with the electrical installation box (10) and/or beam-fixing member (12) attached with the installation box (10). In a preferred embodiment one set of fixing members (102-1,102-2) are at a higher distance from the central cavity (118) and the other set if relatively lower. This configuration can adopt two different sizes of installation box (10) and/or beam-fixing member (12). Preferably the fixing members (102-1,102-2) are disposed symmetrically about the central cavity (118) so as to match with the receiving slots of the installation box (10) and/or beam-fixing member (12). However, in order to attach with installation box (10) and/or beam-fixing member (12) any irregular disposition of fixing members (102-1,102-2) can be adopted. Each of the fixing member (102-1,102-2) is protruding in an outwardly manner and provided with a J-shaped snap at its distal edge, this structure enables smooth engagement and disengagement of the snaps.

Preferably, the set of guiding members (104) consists of four protuberances extending outwardly from said rear surface (114). The cross section of the guiding members (104) decreases towards the distal edge. These guiding members (104) are also disposed symmetrically about the central cavity (118) so as to match with the guide way receiving slots of the installation box (10) and/or beam-fixing member (12). These guild ways align the support member (100) before attaching the fixing member (102-1,102-2) with their corresponding receiving holes. As seen from the figure, these guide ways support the electrical installation box (10) in the vertical direction, whereas the fixing members (102-1,102-2) of the rear surface (114) supports in the horizontal direction, thereby providing a robust support to the electrical installation box (10) for flush mounting.

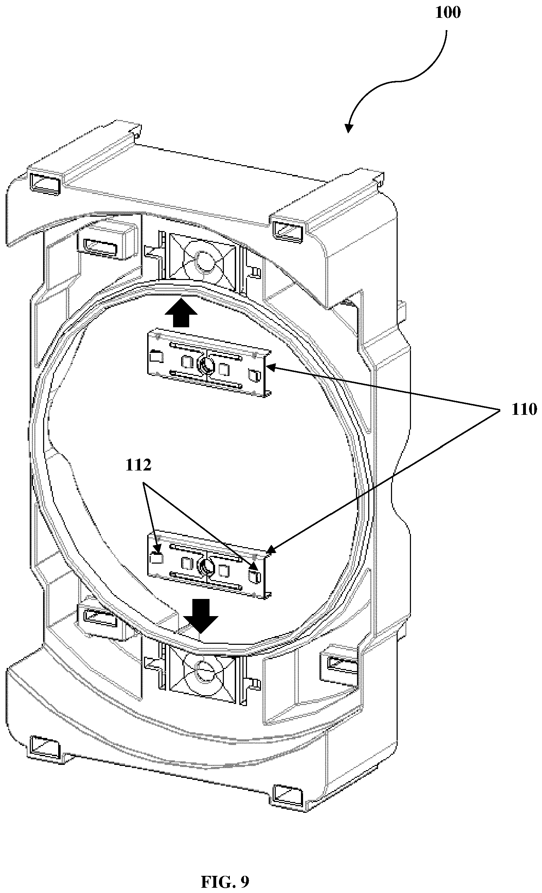

As seen in figures 8(a) to 9, the rear surface (114) preferably consists of a pair receiving provisions (120) disposed symmetrically about said central cavity (118) for engaging two split nut assemblies (110). Each of said receiving provision (120) comprises a pair of legs (124) and a cavity to match with clipping members (112) of said split nut assembly (110). The cavity is preferably conical shaped in nature which also guides fasteners (40) into the split nut assembly (110). The split nut assembly (110) works on the principle of split nut concept, the two splits hold in springing action. When a fastener (40) e.g. screw members are pushed in the split nut assembly (110), it expands and take the screw in so that less energy is spent when fastening the screw and also decreases the assembly time. The two parts of the split nut assembly (110) are held against two springs in opposite direction and they expand or compress in order to adopt the dimension of the fastener (40) inserted there. Two clipping members (112) i.e. the clipping members are clipped with the cavity of said receiving provisions (120). These receiving provisions (120) are provided to clip inside the support member (100). The clipping can be released from the receiving provisions (120) of support member (100) by compression force i.e. pressing the clipping members (112) to disassemble. For tool simplicity a plus shaped groove provided in said support member (100) to build support various types to tools for mounting fastening member e.g. linear screws.

The central cavity (118) as shown in figure 8(b) of the accompanying drawings is annular in nature and extends from rear surface (114) to front surface (116). According to an object of easy alignment and fast installation of the support member (100), the inner periphery (122) said central cavity (118) is provided with threaded grooves. The threaded inner periphery (122) of the central cavity (118) is configured to attach with the entry portion (42) of said electrical installation box (10). Once the threaded portion is attached with the entry portion (42) of the installation box, a torque is applied on either the electrical installation box (10) or the support member (100) to align said support member (100) on the wallboard (14). The support member (100) therefore can be mounted both horizontally and vertically as per the condition of the installation site.

With reference to figure 8(b) of the accompanying drawings, said front surface (116) comprises: a set of releasing slots (108-1, 108-2), and a fastener aligning slot (106). Each of said set of releasing slots (108-1, 108-2) is disposed opposite to every fixing member (102-1,102-2) on said rear surface (114) such that the releasing slots (108-1, 108-2) extend up to the rear surface (114). The releasing slots (108-1, 108-2) have an inner cavity in which a linear solid mechanical part e.g. a screw driver can be inserted such that upon giving a force in a certain direction, the snaps are disengaged from the electrical installation box (10) or the beam-fixing member (12).

The fastener aligning slots (107) are disposed just opposite to said receiving provisions (120) for receiving split nut assembly (110) of said rear surface (114). The cavity portion of said receiving provision (120) extents from the rear surface (114) to the front surface (116) and constitute fastener aligning slots (107). The fastener aligning slots (107) are configured to guide fasteners (40) into said split nut assembly (110). As seen in figure 1 of the accompanying drawings, the split nut assemblies (110) are mounted on the rear surface (114) between the two legs (124) protruding around the receiving provision (120) for receiving the split nut assembly (110).

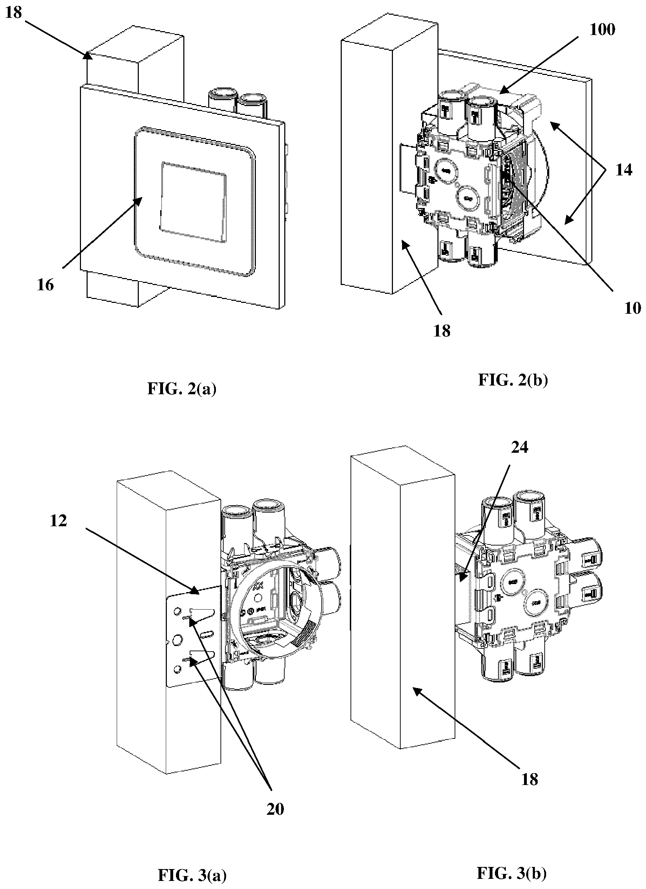

Figure 2 shows the members required for flush mounting of electrical installation box (10). One surface of a beam-fixing member (12) is attached with the installation box (10) and the other surface is attached with a beam (18) of a wall by means of self-nailing members (20). Next the invented support member (100) is attached with the installation box (10) such that the support member (100) rests on a surface of the beam-fixing member (12). This assembly is next mounted on wallboard (14) such that the support member (100) stays in contact with the backside of the wallboard (14) and thereby supports the installation box (10) against any external force at the time of installation. The drill hole (26) at the wallboard (14) is such made that a spacer ring assembly (28) can be mounted with the installation box (10). Also, cutter relief (22) is provided in said beam-fixing member (12) to protect the electrical installation box (10). The central cavity (118) has a matching annular profile for receiving a spacer ring assembly (28). The spacer ring assembly (28) once attached with the installation box (10), conduct telescopic mechanism for adjusting the level said electrical installation box (10) for multiple wallboards (14) configuration. The support member (100) holds the installation box (10) robust with the wallboard (14) to withstand the load of said spacer ring assembly (28). The electrical insert assembly (30) then is installed in the generally cylindrical cavity of the installation box (10). For aesthetic appearance, cover frame (16) in mounted on the wallboard (14), and then a mechanical rocker (32) and central plate (34) is assembled together providing a flush mounted electrical installation box (10).

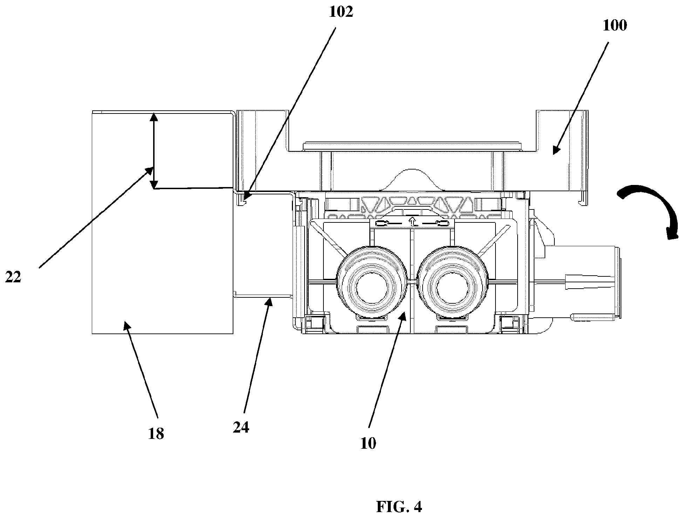

As seen from figure 4 of the accompanying drawings a horizontal deflection-arrest member (24) of the beam-fixing member (12) is in contact with the beam (18) to withstand horizontal forces. Now, the rear surface (114) and the front surface (116) of support member (100) rests on the beam-fixing member (12). Therefore the dimension of the surfaces have to be in par with the beam-fixing member (12)such that the fixing members (102-1,102-2) provided on the rear surface (114) of the support member (100) are snapped with the receiving holes of the beam-fixing member (12).

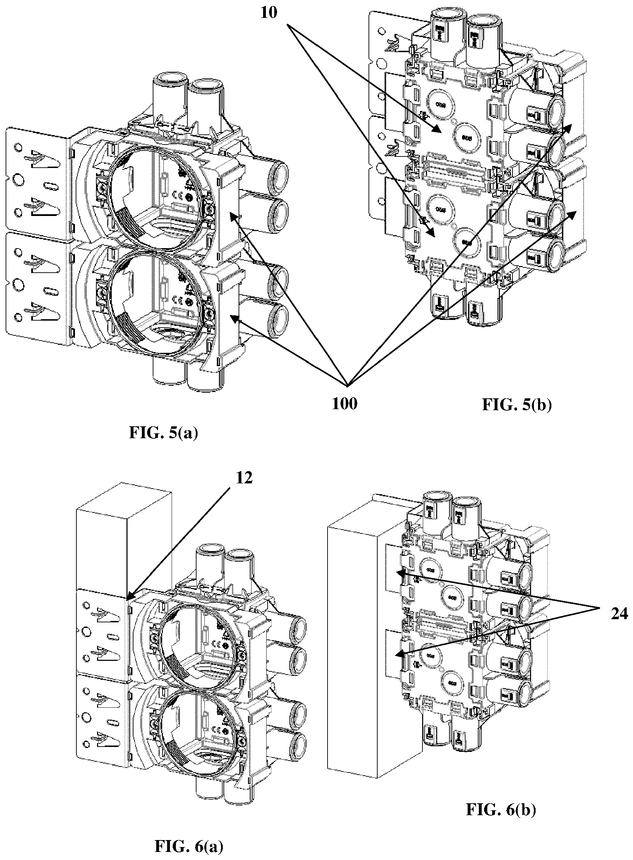

The distal edges of the support member (100) are substantially planner in nature. Therefore while two or more boxes are docked together, the support members (100) mounted on each of the installation boxes (10) also gets in line with each other leaving a gap in between. This has been illustrated in figures 5(a) to 6(b). The guide ways provided in the rear surface (114) of the support member (100) resist any vertical deflection or misalignment of the electrical installation box (10). Also the beam-fixing members (12) provide additional support against external forces.

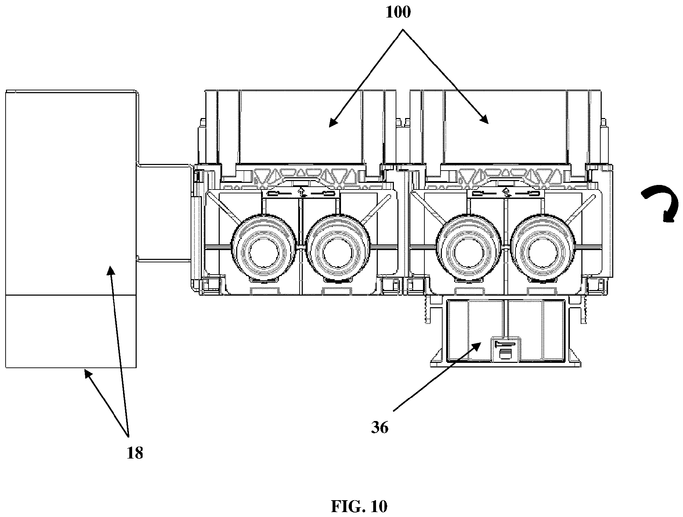

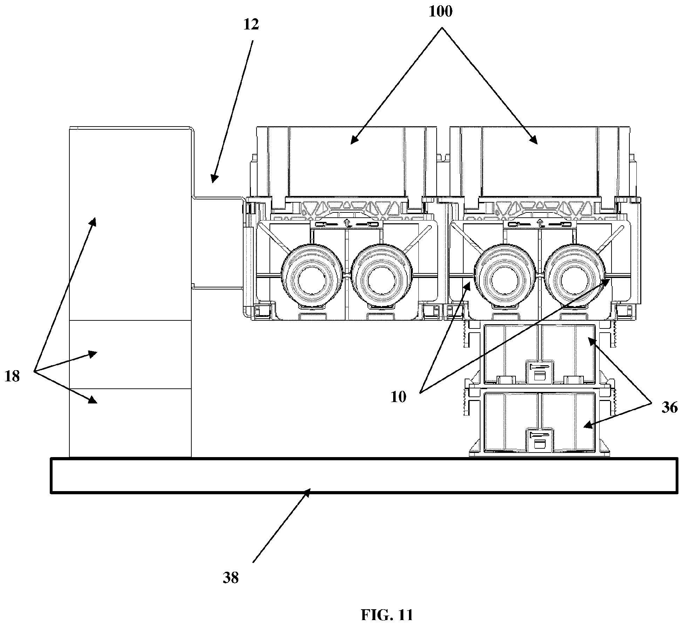

At various installation sites multiple beams are used for support the wall structure. In those cases only the beam-fixing member (12) or the invented support member (100) lacks in providing ample resisting force. A single or multiple board-fixing members (36) are to be used in these scenarios. As shown in figures 10 and 11, the electrical installation box (10) in mounted on more than one beam (18) and therefore at least a board-fixing member (36) is to be mounted on the backside of the electrical installation box (10) and fixed on a backboard (38). The fixing members (102-1,102-2) and guiding members (104) hold the electrical installation box (10) robust with respect to said wallboard (14) and carry the load of said board-fixing member.

Additionally, identification stickers can be placed on the support member (100) that helps to locate the installation box (10) and drill a hole (26) at the wallboard (14). The central cavity (118) can be provided with a lid having a drill support hole which also helps in aligning the drill with the entry portion (42) of the installation box (10). The lid can be knocked-off after drilling is completed.

As already mentioned, the foregoing description is illustrative of the invention and not limitative to its scope.

## Claims

1. System comprising an electrical installation box (10) and a support member (100) attached to said electrical installation box (10) for flush mounting on a wallboard (14), said support member (100) comprising:
- a rear surface (114) removably attached with the electrical installation box (10);
- a front surface (116) to be fixedly attached with the wallboard (14); and
- a central cavity (118) of matching profile with entry portion (42) of the electrical installation box (10), said front surface (116) and rear surface (114) are extended outwardly about said central cavity (118),
wherein said rear surface (114) comprises:
- at least a set of fixing members (102-1,102-2) disposed about said central cavity (118) and extending from said rear surface (114) to removably attach with the electrical installation box (10);
- at least a set of guiding members (104) disposed about said central cavity (118) for aligning said fixing members (102-1,102-2) with said electrical installation box (10); and
- at least a receiving provision (120) which receives a split nut assembly (110), and wherein said front surface (116) comprises:
- at least a set of releasing slots (108-1, 108-2) disposed opposite to every fixing member (102-1,102-2) on said rear surface (114) such that said releasing slots (108-1, 108-2) extend up to said rear surface (114) to release said fixing members (102-1,102-2) from the electrical installation box (10);
- the split nut assembly (110) which has clipping members (112); and
- at least a fastener aligning slot (107) to guide fasteners (40) into said split nut assembly (110), said at least a fastener aligning slot (107) is disposed opposite to said at least a receiving provisions (120) for receiving the split nut assembly (110) of said rear surface (114).

2. The system as claimed in claim 1, wherein said central cavity (118) has a matching annular profile for receiving a spacer ring assembly (28) for adjusting a level of said electrical installation box (10) for multiple wallboards (14) configuration.

3. The system as claimed in claim 2, wherein the annular central cavity (118) is provided with threaded inner periphery (122) to attach with entry portion (42) of said electrical installation box (10) to align said support member (100) by applying torsional force.

4. The system as claimed in any of claims 1 to 3, wherein said at least a receiving provision (120) for receiving split nut assembly (110) comprises a pair of receiving provisions (120) disposed symmetrically about said central cavity (118), each of said receiving provisions (120) comprises a cavity and a pair of legs (124) disposed about the cavity to match with the clipping members (112) of said split nut assembly (110).

5. The system as claimed in any of claims 1 to 4, wherein at least a set of fixing members (102-1,102-2) of said rear surface (114) are linear snaps fits with J-shaped snapping protuberance.

6. The system as claimed in any of claims 1 to 5, wherein said at least a set of fixing members (102-1,102-2) and at least a set of guiding members (104) of said rear surface (114) are disposed symmetrically about said central cavity (118) to match with corresponding receiving slots of the electrical installation box (10).

7. The system as claimed in any of claims 1 to 6, wherein said at least a set of fixing members (102-1,102-2) and at least a set of guiding members (104) of said rear surface (114) are disposed symmetrically about said central cavity (118) to match with corresponding receiving slots of a beam-fixing member (12) attached with said electrical installation box (10).

8. The system as claimed in any of claims 1 to 7, wherein said at least a set of releasing slots (108-1, 108-2) on the front surface (116) are adopted to accommodate a screwdriver to press and disengage the fixing members (102-1,102-2) on said rear surface (114) from the electrical installation box (10).

## Patentansprüche

1. System, umfassend eine elektrische Installationsdose (10) und ein Tragelement (100), das an der elektrischen Installationsdose (10) zum bündigen Montieren an einer Wandplatte (14) angebracht ist, das Tragelement (100) umfassend:
- eine hintere Oberfläche (114), die mit der elektrischen Installationsdose (10) entfernbar angebracht ist;
- eine vordere Oberfläche (116), um mit der Wandplatte (14) fest angebracht zu werden; und
- einen zentralen Hohlraum (118) mit übereinstimmendem Profil zu einem Eingangsabschnitt (42) der elektrischen Installationsdose (10), wobei die vordere Oberfläche (116) und die hintere Oberfläche (114) um den zentralen Hohlraum (118) herum nach außen gestreckt sind,
wobei die hintere Oberfläche (114) umfasst:
- mindestens einen Satz von Befestigungselementen (102-1,102-2), die um den zentralen Hohlraum (118) herum eingerichtet sind und sich von der hinteren Oberfläche (114) erstrecken, um mit der elektrischen Installationsdose (10) entfernbar angebracht zu sein;
- mindestens einen Satz von Führungselementen (104), die um den zentralen Hohlraum (118) herum zum Ausrichten der Befestigungselemente (102-1,102-2) mit der elektrischen Installationsdose (10) eingerichtet sind; und
- mindestens eine Aufnahmeeinrichtung (120), die eine Geteilte-Mutter-Anordnung (110) aufnimmt,
und wobei die vordere Oberfläche (116) umfasst:
- mindestens einen Satz Freigabeschlitze (108-1, 108-2), die gegenüber jedem Befestigungselement (102-1,102-2) an der hinteren Oberfläche (114) derart eingerichtet sind, dass sich die Freigabeschlitze (108-1, 108-2) bis zu der hinteren Oberfläche (114) erstrecken, um die Befestigungselemente (102-1,102-2) von der elektrischen Installationsdose (10) freizugeben;
- die Geteilte-Mutter-Anordnung (110), die Klemmelemente (112) aufweist; und
- mindestens einen Verbindungsgliedausrichtungsschlitz (107), um Verbindungsglieder (40) in die Geteilte-Mutter-Anordnung (110) zu führen, wobei der mindestens eine Verbindungsgliedausrichtungsschlitz (107) gegenüber den mindestens einen Aufnahmeeinrichtungen (120) zum Aufnehmen der Geteilte-Mutter-Anordnung (110) der hinteren Oberfläche (114) eingerichtet ist.

2. System nach Anspruch 1, wobei der zentrale Hohlraum (118) ein übereinstimmendes ringförmiges Profil zum Aufnehmen einer Abstandshalterringanordnung (28) zum Einstellen eines Niveaus der elektrischen Installationsdose (10) für eine Konfiguration für mehrere Wandplatten (14) aufweist.

3. System nach Anspruch 2, wobei der ringförmige zentrale Hohlraum (118) mit einem gewundenen inneren Umfang (122) versehen ist, um mit dem Eingangsabschnitt (42) der elektrischen Installationsdose (10) angebracht zu sein, um das Tragelement (100) durch Anwenden von Torsionskraft auszurichten.

4. System nach einem der Ansprüche 1 bis 3, wobei die mindestens eine Aufnahmeeinrichtung (120) zum Aufnehmen der Geteilte-Mutter-Anordnung (110) ein Paar Aufnahmeeinrichtungen (120), die um den zentralen Hohlraum (118) herum symmetrisch eingerichtet sind, umfasst, wobei jede der Aufnahmeeinrichtungen (120) einen Hohlraum und ein Paar Schenkel (124), die um den Hohlraum herum eingerichtet sind, um mit den Klemmelementen (112) der Geteilte-Mutter-Anordnung (110) übereinzustimmen, umfasst.

5. System nach einem der Ansprüche 1 bis 4, wobei mindestens ein Satz von Befestigungselementen (102-1,102-2) der hinteren Oberfläche (114) lineare Schnapppassungen mit einer J-förmigen Schnapperhebung sind.

6. System nach einem der Ansprüche 1 bis 5, wobei der mindestens eine Satz von Befestigungselementen (102-1,102-2) und mindestens ein Satz von Führungselementen (104) der hinteren Oberfläche (114) um den zentralen Hohlraum (118) herum symmetrisch eingerichtet sind, um mit entsprechenden Aufnahmeschlitzen der elektrischen Installationsdose (10) übereinzustimmen.

7. System nach einem der Ansprüche 1 bis 6, wobei der mindestens eine Satz von Befestigungselementen (102-1,102-2) und mindestens ein Satz von Führungselementen (104) der hinteren Oberfläche (114) um den zentralen Hohlraum (118) herum symmetrisch eingerichtet sind, um mit entsprechenden Aufnahmeschlitzen eines Balkenbefestigungselements (12), das mit der elektrischen Installationsdose (10) angebracht ist, übereinzustimmen.

8. System nach einem der Ansprüche 1 bis 7, wobei der mindestens eine Satz von Freigabeschlitzen (108-1, 108-2) an der vorderen Oberfläche (116) angewendet wird, um einen Schraubendreher zu fassen, um die Befestigungselemente (102-1,102-2) an der hinteren Oberfläche (114) von der elektrischen Installationsdose (10) zu drücken und außer Eingriff zu bringen.

## Revendications

1. Système comprenant un boîtier d'installation électrique (10) et un élément de support (100) attaché audit boîtier d'installation électrique (10) pour un montage encastré sur un panneau mural (14), ledit élément de support (100) comprenant :
- une surface arrière (114) attachée de manière amovible au boîtier d'installation électrique (10) ;
- une surface avant (116) destinée à être attachée de manière fixe au panneau mural (14) ; et
- une cavité centrale (118) de profil adapté à la partie d'entrée (42) du boîtier d'installation électrique (10), ladite surface avant (116) et ladite surface arrière (114) s'étendant vers l'extérieur autour de ladite cavité centrale (118),
dans lequel ladite surface arrière (114) comprend :
- au moins un ensemble d'éléments de fixation (102-1, 102-2) disposés autour de ladite cavité centrale (118) et s'étendant depuis ladite surface arrière (114) pour s'attacher de manière amovible au boîtier d'installation électrique (10) ;
- au moins un ensemble d'éléments de guidage (104) disposés autour de ladite cavité centrale (118) pour aligner lesdits éléments de fixation (102-1, 102-2) avec ledit boîtier d'installation électrique (10) ; et
- au moins une partie de réception (120) qui reçoit un ensemble écrou fendu (110),
et dans lequel ladite surface avant (116) comprend :
- au moins un ensemble de fentes de libération (108-1, 108-2) disposées en face de chaque élément de fixation (102-1, 102-2) sur ladite surface arrière (114) de sorte que lesdites fentes de libération (108-1, 108-2) s'étendent jusqu'à ladite surface arrière (114) pour libérer lesdits éléments de fixation (102-1, 102-2) du boîtier d'installation électrique (10) ;
- l'ensemble écrou fendu (110) qui comporte des éléments de clipsage (112) ; et
- au moins une fente d'alignement de pièces de fixation (107) pour guider des pièces de fixation (40) dans ledit ensemble écrou fendu (110), ladite au moins une fente d'alignement de pièces de fixation (107) est disposée en face de ladite au moins une partie de réception (120) pour recevoir l'ensemble écrou fendu (110) de ladite surface arrière (114).

2. Système selon la revendication 1, dans lequel ladite cavité centrale (118) a un profil annulaire adapté pour recevoir un ensemble bague-entretoise (28) pour ajuster un niveau du boîtier d'installation électrique (10) pour une configuration de panneaux muraux multiples (14).

3. Système selon la revendication 2, dans lequel la cavité centrale annulaire (118) est pourvue d'une périphérie interne filetée (122) pour s'attacher à la partie d'entrée (42) dudit boîtier d'installation électrique (10) afin d'aligner ledit élément de support (100) en appliquant une force de torsion.

4. Système selon l'une quelconque des revendications 1 à 3, dans lequel ladite au moins une partie de réception (120) pour recevoir l'ensemble écrou fendu (110) comprend une paire de parties de réception (120) disposées symétriquement autour de ladite cavité centrale (118), chacune desdites parties de réception (120) comprend une cavité et une paire de pattes (124) disposées autour de la cavité pour s'adapter aux éléments de clipsage (112) dudit ensemble écrou fendu (110).

5. Système selon l'une quelconque des revendications 1 à 4, dans lequel au moins un ensemble d'éléments de fixation (102-1, 102-2) de ladite surface arrière (114) sont des ajustements à encliquetage linéaire avec une protubérance d'encliquetage en forme de J.

6. Système selon l'une quelconque des revendications 1 à 5, dans lequel ledit au moins un ensemble d'éléments de fixation (102-1, 102-2) et au moins un ensemble d'éléments de guidage (104) de ladite surface arrière (114) sont disposés symétriquement autour de ladite cavité centrale (118) pour s'adapter aux fentes de réception correspondantes du boîtier d'installation électrique (10).

7. Système selon l'une quelconque des revendications 1 à 6, dans lequel ledit au moins un ensemble d'éléments de fixation (102-1, 102-2) et au moins un ensemble d'éléments de guidage (104) de ladite surface arrière (114) sont disposés symétriquement autour de ladite cavité centrale (118) pour s'adapter aux fentes de réception correspondantes d'un élément de fixation de poutre (12) attaché audit boîtier d'installation électrique (10).

8. Système selon l'une quelconque des revendications 1 à 7, dans lequel ledit au moins un ensemble de fentes de libération (108-1, 108-2) sur la surface avant (116) sont adaptées pour recevoir un tournevis afin de presser et de désengager les éléments de fixation (102-1, 102-2) sur ladite surface arrière (114) du boîtier d'installation électrique (10).
